# EUROPÄISCHE PATENTSCHRIFT

(11) **EP 1 625 651 B1**
(45) Veröffentlichungstag und Bekanntmachung des Hinweises auf die Patenterteilung: **13.07.2011**
(21) Anmeldenummer: 04725306.7
(22) Anmeldetag: 02.04.2004
(51) Int. Cl.: H02K 7/116, H02K 5/04, H02K 11/04, F16H 1/06, H02K 5/18

(54) **KOMPAKTANTRIEB**
COMPACT DRIVE
ENTRAINEMENT COMPACT

(30) Priorität: 09.05.2003 DE 10321093; 24.06.2003 DE 10328228
(43) Veröffentlichungstag der Anmeldung: 15.02.2006
(73) Patentinhaber: SEW-EURODRIVE GmbH & Co. KG, 76646 Bruchsal (DE)
(72) Erfinder: LEICHTER, Thomas, 76187 Karlsruhe (DE); MAHLEIN, Jochen, 76139 Karlsruhe (DE); SCHMIDT, Josef, 76676 Graben-Neudorf (DE); KÖHLER, Bernhard, 76646 Bruchsal (DE)
(86) Internationale Anmeldenummer: PCT/EP2004/003492
(87) Internationale Veröffentlichungsnummer: WO 2004/100340

(56) Entgegenhaltungen:
- EP-A- 0 993 098
- EP-A- 1 049 234
- EP-A- 1 231 701
- DE-A- 19 913 833
- US-A- 3 149 499
- ANONYMOUS: "Die getriebemotoren ; KEB Combigear" [Online] 15. April 2003 (2003-04-15), KEB , XP002290505 Gefunden im Internet: URL:http://www.keb.de/common/catalogues/Pr odukt/000000099D3-06-01.pdf> [gefunden am 2004-07-26] Seite 9

## Beschreibung

Die Erfindung betrifft einen Kompaktantrieb.

Aus der DE 197 14 784 A1 ist ein Kompaktantrieb bekannt, der einen Elektromotor umfasst, an dessen einer Stirnseite ein Getriebe und an dessen anderer Stirnseite ein Umrichter angeordnet ist. Dabei muss der Elektronikbereich beziehungsweise der Motorbereich gegen das Getriebe abgedichtet werden. Nachteilig ist dabei, dass eine große axiale Länge vorhanden ist und nur an einer Stirnseite des Kompaktantriebs ein Abtrieb zur Verfügung gestellt werden kann.

Aus der DE 199 13 833 A1 ist ein Antriebssystem bekannt, bei dem ein Getriebemotor offenbart ist, wobei die Lagerung der Rotorwelle separat zur Lagerung der Abtriebswelle des Getriebes vorgesehen ist.

Aus der EP 1 049 234 A2 ist eine Antriebseinheit bekannt, wobei der Motor M mit einer Kühlflüssigkeit gekühlt wird.

Der Erfindung liegt daher die Aufgabe zugrunde, einen Kompaktantrieb weiterzubilden unter Vermeidung der vorgenannten Nachteile. Insbesondere soll axiale Länge eingespart werden und möglichst viele Abtriebsvarianten, also einseitiger und doppelseitiger Abtrieb ausführbar sein.

Erfindungsgemäß wird die Aufgabe bei dem Kompaktantrieb nach den in Anspruch 1 angegebenen Merkmalen gelöst.

Wesentliche Merkmale der Erfindung bei dem Kompaktantrieb sind, dass er zumindest einen Elektromotor, ein Getriebe und einen Umrichter, umfasst, wobei die Abtriebswelle des Getriebes und die Rotorwelle parallel zueinander angeordnet sind,
wobei Rotorwelle und mindestens eine Abtriebswelle, des Getriebes im selben Gehäuseteil gelagert sind,
wobei der Umrichter seitlich von der Rotorwelle angeordnet ist,
wobei der Getriebebereich gegen die Umgebung und gegen den Bereich des Motors sowie gegen den Elektronikraumbereich abgedichtet ist,
wobei zwischen Elektronikraumbereich und Motorraumbereich eine Wärmedämmung vorgesehen ist.

Von Vorteil ist dabei, dass axiale Baulänge einsparbar ist und einseitiger und doppelseitiger Abtrieb ausführbar ist.

Bei einer vorteilhaften Ausgestaltung ist der Elektromotor ein Synchronmotor. Von Vorteil ist dabei, dass hochdynamische Positionieraufgaben vom Kompaktantrieb ausführbar sind und/oder ein hohes Drehmoment über den gesamten Drehzahlbereich verfügbar ist.

Der Umrichter ist seitlich von der Rotorwelle sowie der Abstriebswelle des Getriebes angeordnet. Von Vorteil ist dabei, dass Baulänge einsparbar ist und beide Seiten der Abtriebswelle zugänglich sind, also ein beidseitiger Abtrieb vorsehbar ist.

Bei einer vorteilhaften Ausgestaltung ist der Getriebebereich gegen die Umgebung und gegen den Bereich des Motors sowie gegen den Elektronikraumbereich abgedichtet. Von Vorteil ist dabei, dass der Getriebebereich Schmieröl umfassen darf und die Elektronik sowie die Stator- und Rotorteile geschützt bleiben vor dem Schmiermittel.

Es befinden sich der Getriebebereich, der Bereich des Motors und der Elektronikraumbereich auf einem ungefähr gleichen Temperaturniveau. Von Vorteil ist dabei, dass keine Wärmedämmungen notwendig sind und somit Material, Masse und Kosten einsparbar sind.

Bei einer vorteilhaften Ausgestaltung umfasst der Motor einen an dem einen Ende der Rotorwelle angeordneten Geber. Von Vorteil ist dabei, dass der Kompaktantrieb für Positionieraufgaben verwendbar ist und der Geber vom Gehäuse des Kompaktantriebs geschützt ist. An dem anderen Ende der Rotorwelle ist eine Bremse verbindbar, die ebenfalls vom Gehäuse des Kompaktantriebs schützbar ist.

Bei einer weiteren vorteilhaften Ausführung enthält der Motor keinen Geber, sondern wird die Lage mit Hilfe eines Schätzverfahrens ermittelt wodurch axialer Bauraum eingespart wird.

Wesentlicher Vorteil ist bei der Erfindung auch, dass die Rotorwelle ganz im Inneren des Gehäuses bleibt und somit keine Dichtungen von der Rotorwelle zur Umgebung hin notwendig sind. Es genügt somit also ein einziger Wellendichtring, der auf der Rotorwelle läuft. Da die Rotorwelle eine hohe Drehzahl aufweisen kann, ist somit die Wärmeproduktion sehr viel kleiner als bei einem Motor, der zwei Wellendichtringe aufweist, insbesondere an seinen beiden axialen Enden der Rotorwelle.

Die Abtriebswelle weist beispielsweise drei Wellendichtringe auf. Da die Drehzahl aber viel geringer ist als bei der Rotorwelle ist die Gesamtproduktion an Wärme kleiner als bei einer Antriebs-Lösung, bei welcher sowohl die Rotorwelle als auch die Abtriebswelle zwei Wellendichtringe aufweist.

Bei einer vorteilhaften Ausgestaltung des Getriebes wird zumindest eine Stirnradstufe verwendet, wodurch die axiale Baulänge sinkt und eine kostenoptimale Lösung entsteht.

Bei einer vorteilhaften Ausgestaltung wird die Getriebestufe als Verstellgetriebe mit einem variablen Übersetzungsverhältnis ausgeführt, wodurch der Verschleiß der Getriebestufe vom Drehzahlbereich minimiert und die Drehmomentübersetzung an den Belastungsfall angepasst wird. Vorteilhaft ist bei dem Verstellgetriebe, dass sogar alle Dichtungen zum Motorraumbereich entfallen können, da ein Verstellgetriebe, insbesondere ein Breitkeilriemengetriebe, keinen oder nur unwesentliche Mengen von Schmierstoff benötigt. Somit sind nur Dichtungen vom Inneren des Kompaktantriebs zur äußeren Umgebung hin notwendig.

Weiterhin sind Rotorwelle und Abstriebswelle des Getriebes im selben Gehäuseteil gelagert. Von Vorteil ist dabei, dass eine genaue Ausrichtung der Wellen zueinander schon bei der Fertigung und Bearbeitung des Gehäuseteils erreichbar ist. Denn das Gehäuseteil wird in nur einer Aufspannung endbearbeitbar und somit die relative Lage der Lagersitze sehr genau zueinander ausrichtbar.

Weitere Vorteile ergeben sich aus den Unteransprüchen.

### Bezugszeichenliste

- 1: Lager
- 2: Wellendichtring
- 3: Gehäusedeckel
- 4: Kühlvorrichtungen
- 5: Wellendichtring
- 6: Lager
- 7: Wellendichtring
- 8: Abtriebswelle
- 9: Lager
- 10: Zahnrad
- 11: Stator
- 12: Permanentmagnete
- 13: Rotorwelle
- 14: Ritzel
- 15: Wellendichtring
- 16: Statorwicklung
- 17: Elektronikraumbereich
- 18: Lager
- 19: Resolverstator
- 20: Lager
- 21: Gehäuseteil
- 22: Gehäuseteil
- 23: Resolverrotor
- 31: Elektronikraumbereich
- 40: Getriebe
- 51: Gehäusedeckel
- 52: Gehäuseteil
- 53: unterer Gehäusedeckel
- 54: glatte Rillen
- 55: Leistungselektronik
- 56: Platine
- 57: Lager
- 58: Steckverbinderteil
- 59: Statorblechpaket
- 60: Lager
- 61: Winkelgeber
- 62: Platine mit Anschlussvorrichtungen für Motorversorgungsleitungen
- 63: Steckverbinderteil
- 64: Ritzel
- 65: Lager
- 66: Zahnrad
- 67: Zahnrad
- 68: Ritzelwelle
- 69: Lager
- 70: Lager
- 71: Zahnrad auf Abtriebswelle
- 72: Lager
- 73: Abtriebswelle in Hohlwellenausführung
- 74: Ritzelwelle
- 171: Montageöffnung für erste Zwischenwelle
- 172: Montageöffnung für zweite Zwischenwelle
- 173: PG-Verschraubungen

Die Erfindung wird nun anhand von Abbildungen näher erläutert:

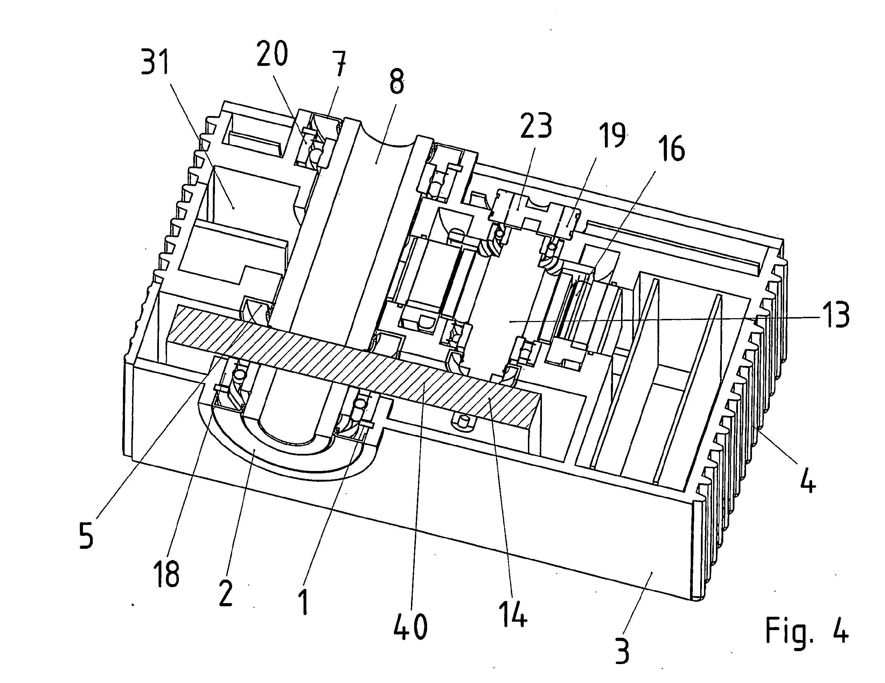

In der Figur 4 ist ein erfindungsgemäßer Kompaktantrieb in Schrägansicht gezeichnet, wobei das Getriebe 40 nur symbolisch angedeutet ist.

In der Figur 1 ist ein erfindungsgemäßer Kompaktantrieb in Schrägansicht gezeichnet.

In der Figur 2 ist ein erfindungsgemäßer Kompaktantrieb angeschnitten gezeigt.

In der Figur 3 ist ein erfindungsgemäßer Kompaktantrieb angeschnitten gezeigt, bei dem im Unterschied zu Figur 2 der Umrichter auf der anderen Seite von der Abtriebswelle als der Motor angeordnet ist.

In Figur 5 ist ein weiteres erfindungsgemäßes Ausführungsbeispiel gezeigt, wobei ein dreistufiges Getriebe ausgeführt ist.

Figur 6 zeigt eine andere Ansicht wie bei Figur 5.

Figur 7 zeigt eine Außenansicht zum Ausführungsbeispiel nach Figur 5.

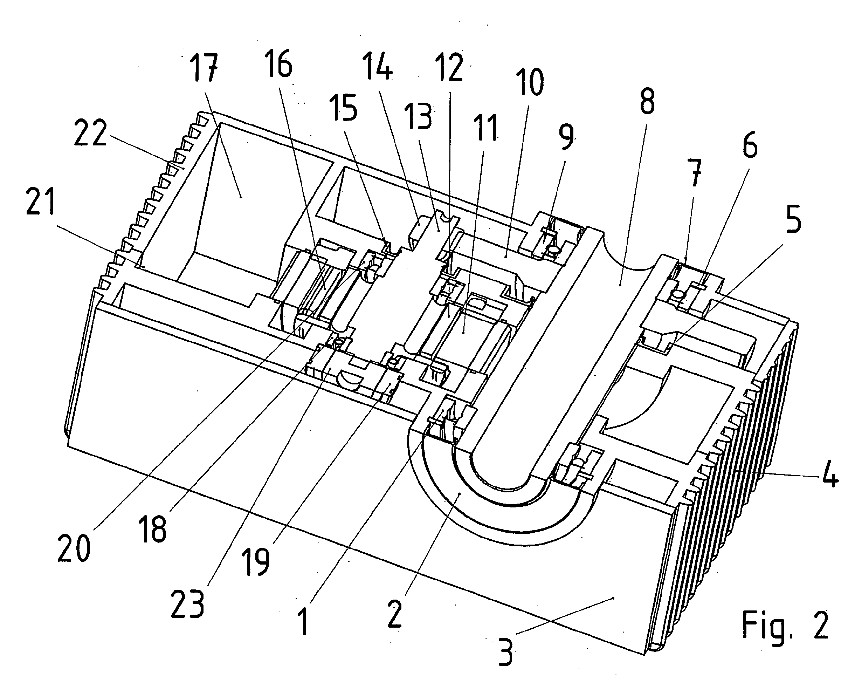

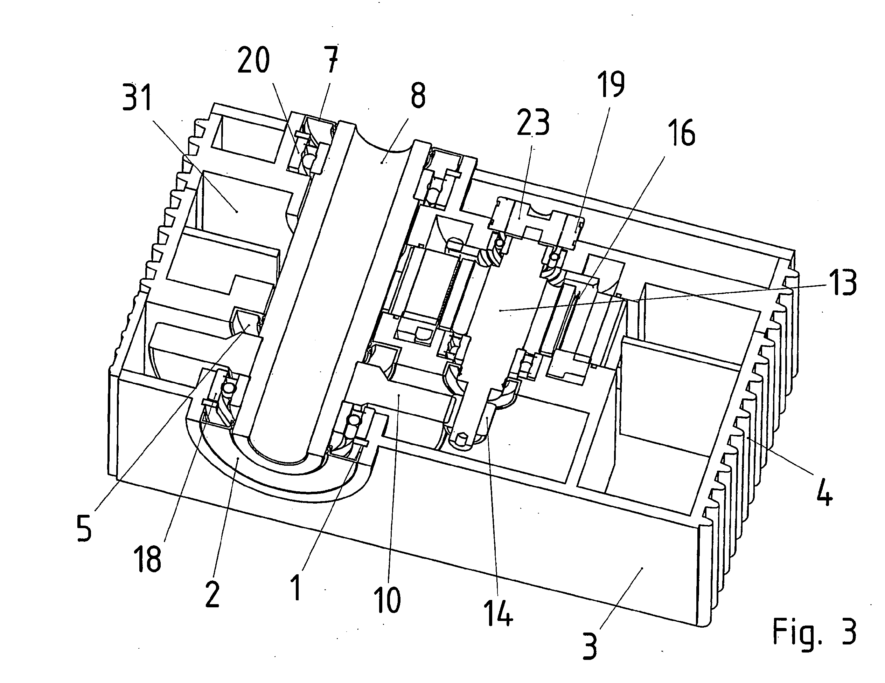

Das symbolisch angedeutete Getriebe 40 in Figur 4 ist bei verschiedenen erfindungsgemäßen Ausführungsvarianten jeweils verschiedenartig ausgeführt. In einer ersten Variante ist es als Stirnradgetriebe ausgeführt, was in den Figuren 2 und 3 auch verdeutlicht ist. In einer anderen Variante ist das Getriebe aus Figur 4 als Verstellgetriebe ausgeführt. Dieses Verstellgetriebe ist entweder in der Art eines VARIMOT-Getriebes der Firma SEW-EURODRIVE ausführbar, also mit zwei aneinander reibenden Scheiben, oder in der Art eines VARIBLOC-Getriebes der Firma SEW-EURODRIVE ausführbar, also als Breitkeilriemengetriebe wobei der Abstand zweier kegeliger Verstellscheiben die Übersetzung bestimmen. Bei einem weiteren erfindungsgemäßen Ausführungsbeispiel ist auch statt eines Keilriemens eine Kette vorteiligerweise verwendbar.

Im erfindungsgemäßen Ausführungsbeispiel nach Figur 2 ist der Motor seitlich von der Abtriebswelle angeordnet. Die Rotorwelle 13 und die Abtriebswelle 8 sind also parallel angeordnet. Der Achsabstand dieser Wellen ist bestimmt durch die Verzahnungsteile der Stirnradgetriebestufe, die aus einem mit der Rotorwelle 13 formschlüssig und/oder kraftschlüssig verbundenen Ritzel 14 und einem als Stirnrad ausgeführten Zahnrad 10, das mit der Abtriebswelle 8 verbunden ist, besteht.

Der Raumbereich des Getriebes, also der Stirnradgetriebestufe, ist von dem Raumbereich des Elektromotors abgedichtet ausgeführt. Der Wellendichtring 15 dichtet diese Raumbereiche an der Rotorwelle ab, da die Rotorwelle im Raumbereich des Motors die Permanentmagnete 12 trägt und im Raumbereich des Getriebes das Ritzel 14. Der Wellendichtring 5 dichtet den Raumbereich des Getriebes vom Raumbereich des Motors an der Abtriebswelle 8 ab, die als Hohlwelle ausgeführt ist.

Bei einem weiteren erfindungsgemäßen Ausführungsbeispiel ist statt der gezeigten Stirnradgetriebestufe ein anderes Getriebe, umfassend mehrere Getriebestufen, einsetzbar.

Bei einem weiteren erfindungsgemäßen Ausführungsbeispiel ist die Abtriebswelle nicht Hohlwelle sondern als Vollwelle ausgebildet. Des Weiteren besteht auch die Möglichkeit, die Abtriebswelle gemäß der Norm für Roboterschnittstellen auszubilden, wodurch ein sehr kompakter Abtrieb mit geringer axialer Baulänge entsteht.

Die Abtriebswelle 8 ist über das Lager 1 in demselben Gehäuseteil 21 gelagert, in welchem auch die Rotorwelle 13 über das Lager 18 gelagert ist.

Mittels des auf der Abtriebswelle 8 laufenden und in das Gehäusedeckels 3 eingesetzten Wellendichtrings 2 ist der Raumbereich des Motors gegen die Umgebung abgedichtet.

Die Gehäuseteile 21 und 22 sind mit Kühlvorrichtungen 4 versehen zur Abführung der im Motor, Getriebe und Umrichter entstehenden Wärme.

Die Abtriebswelle 8 ist über das andere, axial gegenüber liegende Lager (6,9) wiederum in dem selben Gehäuseteil 22 gelagert, in welchem auch die Rotorwelle 13 über das andere Lager 20 gelagert ist.

Wesentlicher Vorteil bei dem Kompaktantrieb ist, dass keine Kupplung zwischen Motor und Getriebe notwendig ist und somit zusätzliche Teile entfallen. Insbesondere verwenden Motor und Getriebe sogar gleiche Gehäuseteile gemeinsam. Darüber hinaus ist eine genaue Ausrichtung der Wellen zueinander schon bei der Fertigung und Bearbeitung des Gehäuseteils erreichbar, indem Lagersitze für Motor und Getriebe, insbesondere beispielhaft die Lager 9 und 20, in ihrer relativen Lage zueinander beim Herstellen äußerst genau festlegbar sind. Denn das Gehäuseteil wird in nur einer Werkzeugmaschine in einer einzigen Aufspannung endbearbeitbar und somit die relative Lage der Lagersitze sehr genau zueinander ausrichtbar. Weiter vorteilhaft an der gemeinsamen Nutzung eines Gehäuseteils ist auch, dass der Kompaktantrieb auf diese Weise nicht nur ein kleines Bauvolumen benötigt sondern auch eine besonders hohe Stabilität aufweist, da die Kräfte des Motors und des Getriebes innerhalb desselben Gehäuseteils zueinander geleitet werden.

Mittels des auf der Abtriebswelle 8 laufenden und in das Gehäuseteil 22 eingesetzten Wellendichtrings 7 ist der Raumbereich des Getriebes gegen die Umgebung abgedichtet.

Der Stator 11 mit den Statorwicklungen 16 ist um die Rotorwelle 13 herum angeordnet.

Dieser Elektromotor ist als Mehrphasen-Synchronmotor ausgeführt. Es sind jedoch bei anderen erfindungsgemäßen Ausführungsbeispielen auch beliebige andere Motoren statt des Synchronmotors integrierbar in den Kompaktantrieb.

Der auf der Rotorwelle laufende, in das Gehäuseteil 22 eingesetzte Wellendichtring 15 dichtet den Raumbereich des Getriebes vom Raumbereich des Motors ab.

Der Elektronikraumbereich 17 für den Umrichter ist zum Raumbereich des Motors nicht abgedichtet.

Der Motor trägt an seinem einen axialen Ende einen Resolver, der einen Resolverstator 19 und einen Resolverrotor 23 umfasst.

Bei anderen erfindungsgemäßen Ausführungsbeispielen sind statt des Resolvers auch andere Winkelsensoren oder Winkelgeschwindigkeitssensoren vorsehbar. Auch ist bei anderen erfindungsgemäßen Ausführungsbeispielen an der dem Winkelsensor gegenüberliegenden Seite eine Bremse in den Kompaktantrieb integrierbar.

Bei wiederum anderen erfindungsgemäßen Ausführungsbeispielen ist der Umrichter derart betrieben, dass mittels eines Verfahrens der Winkelwert geschätzt wird unter Verwendung eines geeigneten Motor-Modells. Somit ist weitere axiale Baulänge einsparbar.

In der Figur 2 ist eine andere Variante eines erfindungsgemäßen Ausführungsbeispiels gezeigt, bei dem der Elektronikraumbereich 31 nicht direkt zum Raumbereich des Motors ist sondern die Abtriebswelle 8 dazwischen liegt. In diesem Beispiel dichtet dann der Wellendichtring 5 den Raumbereich des Getriebes gegen den Elektronikraumbereich 31 ab, wobei der Wellendichtring 5 auf der Abtriebswelle 8 läuft und im Gehäuseteil 21 sitzt.

Der Getrieberaumbereich ist mit Schmierstoff, wie Schmieröl, Schmierfett oder dergleichen, befüllbar.

Bei den erfindungsgemäßen Ausführungsbeispielen sind auch Wärmedämmungen zwischen zweien oder mehreren der Raumbereiche vorsehbar.

Bei weiteren erfindungsgemäßen Ausführungsbeispielen ist der Motor hochpolig ausgeführt, insbesondere acht- oder zehnpolig. Der Motor ist vorteiligerweise nach Art der

DE 100 49 883 ausgeführt oder nach Art der DE 103 17 749. Somit ist im Kompaktantrieb eine einzige Getriebestufe zusammen mit einem solchen Mehrphasenmotor ausreichend, um einen weiten Bereich an Übersetzungszahlen zu überdecken.

Bei weiteren erfindungsgemäßen Ausführungsbeispielen ist als Abtriebswelle keine Hohlwelle sondern ein zylindrischer Wellenstumpf ausgeführt, wobei diese Abtriebswelle mittels Passfederverbindung mit der anzutreibenden Vorrichtung verbindbar ist.

Bei weiteren erfindungsgemäßen Ausführungsbeispielen ist die Abtriebswelle und das abtriebsseitige Gehäuseteil nach Art der Roboterschnittstelle EN-ISO 9402 -1 ausgeführt. Somit ist axiale Baulänge einsparbar und ein hohes Drehmoment übertragbar. Außerdem ist Kompatibilität mit entsprechenden, anzutreibenden und anzuschließenden Vorrichtungen erreicht.

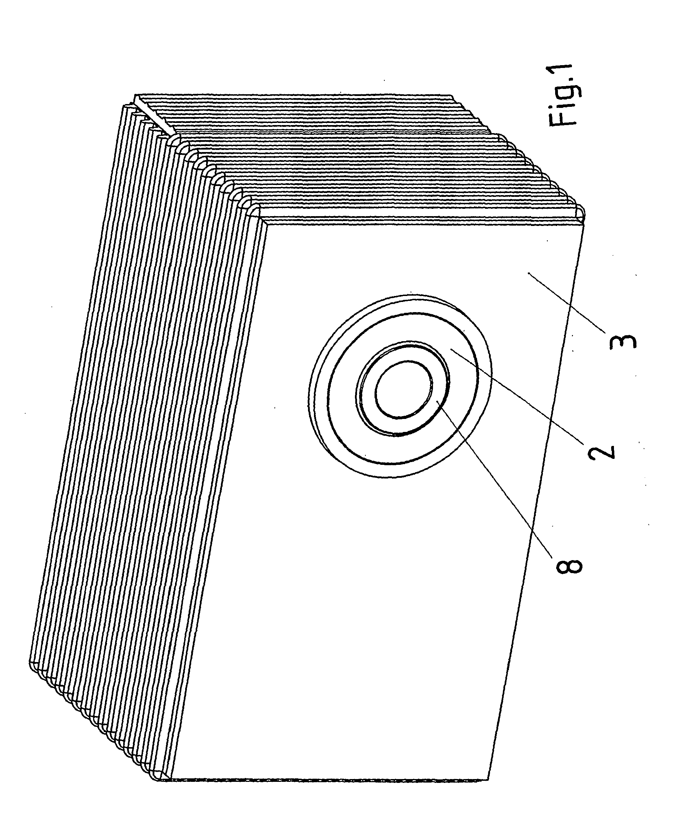

Die elektrischen Anschlussvorrichtungen sind auf der Rückseite des Gehäuses vorgesehen und daher in den Figuren 1 bis 4 nicht sichtbar. Bei weiteren erfindungsgemäßen Ausführungsbeispielen sind jedoch auch andere Positionen für die Anschlussvorrichtungen vorsehbar.

Bei weiteren erfindungsgemäßen Ausführungsbeispielen sind die Anschlussvorrichtungen nur als Energieversorgung ausgeführt. Insbesondere sind nur Starkstromkabel zum Kompaktantrieb geführt. Die für die Datenkommunikation notwendige Übertragung von Daten zum oder vom Umrichter zu einer anderen, insbesondere übergeordneten Einheit, erfolgt dabei mittels Aufmodulation auf die Leistungsleitungen. Die Aufmodulation ist in bekannter Weise ausführbar, insbesondere wie aus der Powerline-Kommunikation oder nach dem FSK oder nach dem FH/PSK-Verfahren, also mache dem Frequency Hopping Phase Shift Keying, bekannt.

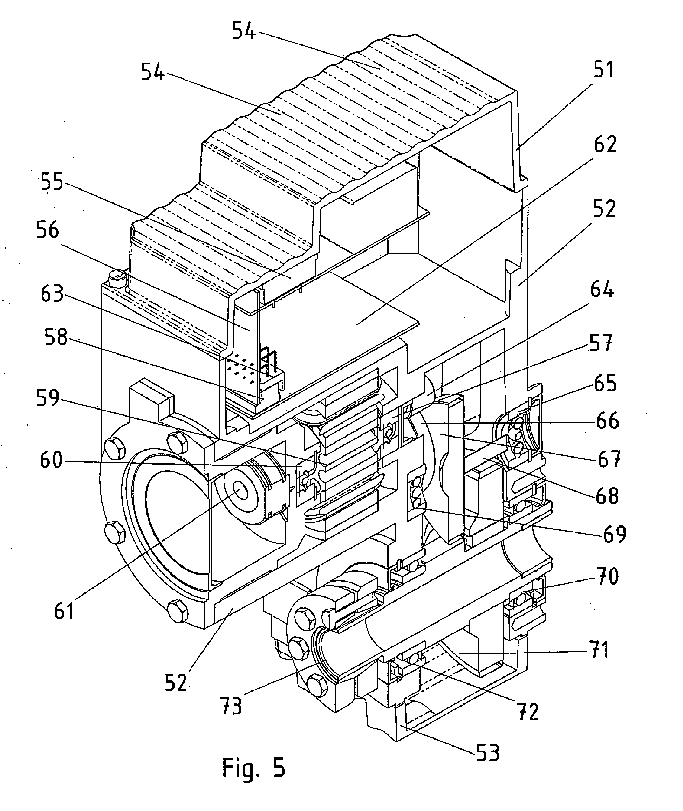

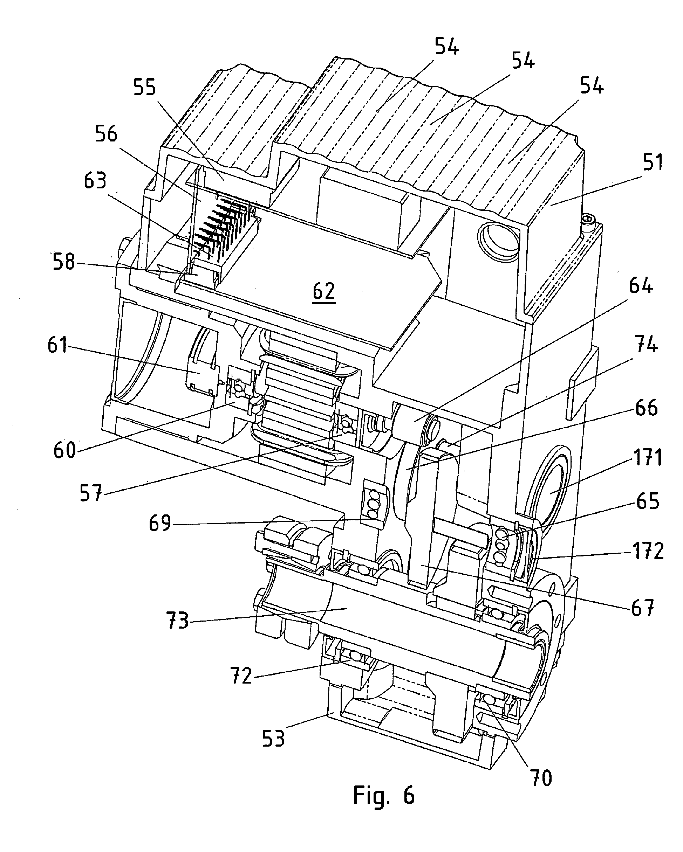

In Figur.5, 6 und 7 ist ein weiteres erfindungsgemäßes Ausführungsbeispiel in verschiedenen Ansichten gezeigt, wobei ein dreistufiges Getriebe ausgeführt ist.

Dabei ist der Gehäusedeckel 51 zur Abdeckung der Elektronik vorgesehen und mit dem Gehäuseteil 52 dicht und fest, aber lösbar, verbunden. Der Gehäusedeckel dient auch zur Abfuhr der Wärme der Leistungselektronik 55 und ist dazu wärmeleitend mit dieser verbunden. Außerdem weist der Gehäusedeckel glatte Rillen 54, also im Wesentlichen parallel verlaufende wellenförmige Erhebungen und Vertiefungen auf, die Kühlkörperfunktion umfassen, wobei Flüssigkeiten, wie beispielsweise Wasser oder Saft, schnell und leicht abfließen können und somit die Korrosionsgefahr und Verschmutzungsgefahr für das Gehäuse vermindert ist. Das Gehäuseteil 52 weist gehäusebildende Funktion für den Motor und das Getriebe auf, wobei ein unterer Gehäusedeckel 53 an ihm vorgesehen ist.

Die Elektronik umfasst mehrere Platinen, die miteinander elektrisch und/oder mechanisch verbunden sind.

Schematisch angedeutet sind davon drei Platinen, wobei eine erste Signalelektronik und Leistungselektronik 55 trägt, eine zweite, mit der erste verbundene Platine 56 ein Steckverbinderteil 58 trägt

Die Rotorwelle des Motors ist über die Lager 57 und 60 im Gehäuseteil 52 gelagert und ist an einem ihrer Enden mit einem Winkelgeber 61 verbunden.

Das Statorblechpaket 59 ist im Gehäuseteil 52 verbunden.

Die Platine 62 ist mit Anschlussvorrichtungen für Motorversorgungsleitungen und Netzzuleitungen ausgeführt. Auch weitere Leitungen sind hier anschließbar, wie Temperatursensorleitungen für die Statorwicklungen des Motors und Leitungen des am einen Ende der Rotorwelle vorgesehenen Winkelgebers 61. Über das Steckverbinderteil 58, das auf der Platine 62 verbunden ist, insbesondere eingelötet ist, und das entsprechende Gegen-Steckverbinderteil 63, das mit der Platine 56 verbunden ist, ist die Signalelektronik und Leistungselektronik elektrisch angeschlossen. Die Netzversorgung der Elektronik wird über PG-Verschraubungen 173 ebenfalls an die Platine 62 zugeführt.

Das Ritzel 64 ist mit der Rotorwelle fest verbunden, insbesondere vorteiligerweise einstückig ausgeführt, wobei das Ritzel 64 mit einem Zahnrad 66 im Eingriff steht, das auf einer ersten Zwischenwelle montiert ist, welche wiederum einen Ritzelwellenabschnitt 74 trägt. Dieser letztgenannte Ritzelwellenabschnitt steht im Eingriff mit einem Zahnrad 67, das auf einer zweiten Zwischenwelle montiert ist. Die Lager 65 und 69 dienen zur Lagerung der zweiten Zwischenwelle, die das Zahnrad 67 trägt und einen Ritzelwellenabschnitt 68 umfasst. Der Ritzelwellenabschnitt 68 steht im Eingriff mit einem Zahnrad 71, das auf der Abtriebswelle 73 montiert ist, die als Hohlwelle ausgeführt ist.

Die Abtriebswelle 73 ist über Lager 70 und 72 im Gehäuseteil 52 gelagert.

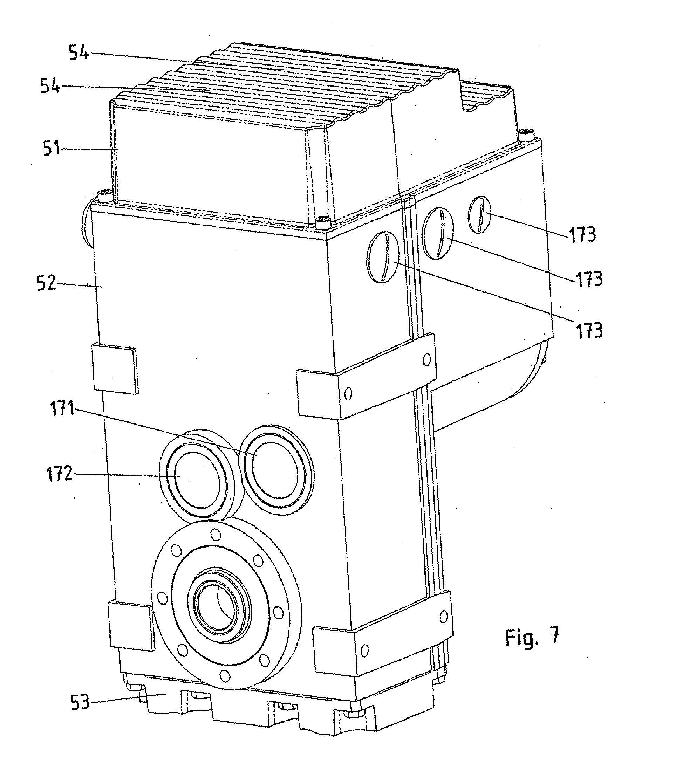

In Figur 7 sind die Montageöffnung 171 für die erste Zwischenwelle und die Montageöffnung 172 für die zweite Zwischenwelle gezeigt. Diese werden mit geeigneten Abdeckmitteln dicht verschlossen.

Die PG-Verschraubungen 173 sind am Gehäuseteil 52 vorgesehen und dienen der Durchführung von Kabeln zu den Anschlussvorrichtungen der Platine 62. Von dort führen elektrische Leiterbahnen zum Steckverbinder 58 und von diesem über den Steckverbinder 63 und die Platine 56 zur Elektronik. Von der Leistungselektronik 55 führen die Versorgungsleitungen für den Motor wiederum über die Platine 56 und die Steckverbinder 58 und 63 und die Anschlussvorrichtungen auf der Platine 62 zum Stator des Motors.

## Patentansprüche

1. Kompaktantrieb,
umfassend zumindest einen Elektromotor, ein Getriebe (40) und einen den Elektromotor versorgenden Umrichter,
wobei die Abtriebswelle (8, 73) des Getriebes (40) und die Rotorwelle (13) parallel zueinander angeordnet sind
und der Achsabstand von zumindest einer Getriebestufe bestimmt ist,
wobei die Rotorwelle (13) sowie die Abtriebswelle (8, 73) des Getriebes (40) im selben Gehäuseteil (52) gelagert sind,
wobei der Umrichter seitlich von der Rotorwelle (13) sowie der Abtriebswelle (8,73) des Getriebes
angeordnet ist,
wobei der Getriebebereich gegen die Umgebung und gegen den Bereich des Motors sowie gegen den Elektronikraumbereich (17, 31) abgedichtet ist,
wobei zwischen Elektronikraumbereich (17, 31) und Motorraumbereich eine Wärmedämmung vorgesehen ist,
wobei das Gehäuse des Getriebes aus Gehäuseteilen (52) und Gehäusedeckeln (51) zusammengesetzt ist,
wobei das Gehäuse zumindest einen Bereich umfasst, der Erhebungen und Vertiefungen, also Rillen und/oder Wellen (54), aufweist, die ein Abfließen von Flüssigkeiten ermöglichen und zur Wärmeabfuhr geeignet sind,
wobei die Wellen (54) derart ausführt sind, dass der Wärmeübergangswiderstand von dem Bereich mit Wellen zur Umgebungsluft geringer ist als der Wärmeübergangswiderstand von einem ebenen Bereich zur Umgebungsluft,
**dadurch gekennzeichnet, dass**
der Wärmeübergangswiderstand von der Leistungselektronik der elektronischen Schaltung über den Bereich mit Wellen (54) zur Umgebungsluft geringer ist als der Wärmeübergangswiderstand von der Leistungselektronik über einen ebenen Bereich zur Umgebungsluft
und
nur ein einziger Wellendichtring (5, 7, 15) auf der Rotorwelle (13) läuft,

2. Kompaktantrieb nach mindestens einem der vorangegangenen Ansprüche,
**dadurch gekennzeichnet, dass**
mindestens eine Getriebestufe als Stirnradgetriebestufe ausgeführt ist.

3. Kompaktantrieb nach mindestens einem der vorangegangenen Ansprüche,
**dadurch gekennzeichnet, dass**
die Getriebestufe als Verstellgetriebe ausgeführt ist, insbesondere als Breitkeilriemengetriebe oder Kettenantrieb.

4. Kompaktantrieb nach mindestens einem der vorangegangenen Ansprüche,
**dadurch gekennzeichnet, dass**
drei Wellendichtringe (5, 7,15) auf der Abtriebswelle laufen.

5. Kompaktantrieb nach mindestens einem der vorangegangenen Ansprüche,
**dadurch gekennzeichnet, dass**
elektrische Anschlussvorrichtungen für Leistungsleitungen an einem Gehäuseteil des Kompaktantriebs vorgesehen sind.

## Claims

1. A compact drive,
comprising at least an electric motor, a gear unit (40) and an inverter supplying the electric motor,
wherein the output shaft (8, 73) of the gear unit (40) and the rotor shaft (13) are arranged parallel to one another
and the centre distance is determined by at least one gear stage, wherein the rotor shaft (13) and the output shaft (8, 73) of the gear unit (40) are mounted in the same housing part (52),
wherein the inverter is arranged to the side of the rotor shaft (13) as well as the output shaft (8, 73) of the gear unit,
wherein the gear-unit region is sealed with respect to the surroundings and with respect to the region of the motor as well as with respect to the electronics compartment region (17, 31),
wherein thermal insulation is provided between the electronics compartment region (17, 31) and the motor compartment region, wherein the housing of the gear unit is assembled from housing parts (52) and housing covers (51),
wherein the housing comprises at least one region having elevations and depressions, therefore grooves and/or waves (54), which enable fluids to flow away and which are suitable for the removal of heat, wherein the waves (54) are such that the heat-transmission resistance from the region with waves to the ambient air is less than the heat-transmission resistance from a plane region to the ambient air, **characterised in that** the heat-transmission resistance from the power electronics of the electronic circuit to the ambient air via the region with waves (54) is less than the heat-transmission resistance from the power electronics to the ambient air via a plane region
and
only a single shaft-sealing ring (5, 7, 15) runs on the rotor shaft (13).

2. A compact drive according to at least one of the preceding claims, **characterised in that** at least one gear stage is in the form of a spur-gear stage.

3. A compact drive according to at least one of the preceding claims, **characterised in that** the gear stage is in the form of a variable speed gear unit, in particular in the form of a wide V-belt gear unit or chain drive.

4. A compact drive according to at least one of the preceding claims, **characterised in that** three shaft-sealing rings (5, 7, 15) run on the output shaft.

5. A compact drive according to at least one of the preceding claims, **characterised in that** electrical connection devices for load leads are provided on a housing part of the compact drive.

## Revendications

1. Entraînement compact,
comprenant au moins un moteur électrique, un réducteur (40) et un variateur de fréquence alimentant le moteur électrique,
l'arbre de sortie (8, 73) du réducteur (40) et l'arbre de rotor (13) étant disposés parallèlement l'un à l'autre
et la distance entre axes étant déterminée par au moins un étage de réducteur,
l'arbre de rotor (13) ainsi que l'arbre de sortie (8, 73) du réducteur (40) étant montés dans la même partie de carter (52),
le variateur de fréquence étant disposé à côté de l'arbre de rotor (13) ainsi que de l'arbre de sortie (8, 73) du réducteur,
la zone du réducteur étant rendue étanche par rapport à l'environnement et par rapport à la zone du moteur ainsi que par rapport à la zone du compartiment de l'électronique (17, 31),
une isolation thermique étant prévue entre la zone du compartiment de l'électronique (17, 31) et la zone du compartiment moteur,
le carter du réducteur étant composé de parties de carter (52) et de couvercles de carter (51),
le carter comprenant au moins une zone qui présente des élévations et des creux, donc des rainures et/ou des ondes (54), qui permettent un écoulement de liquides et une dissipation de chaleur,
les ondes (54) étant réalisées de façon que la résistance de transfert de chaleur vers l'air ambiant de la zone pourvue d'ondes soit plus faible que la résistance de transfert de chaleur vers l'air ambiant d'une zone plane,
**caractérisé en ce**
**que** la résistance de transfert de chaleur de l'électronique de puissance du circuit électronique vers l'air ambiant par la zone pourvue d'ondes (54) est plus faible que la résistance de transfert de chaleur de l'électronique de puissance vers l'air ambiant par l'intermédiaire d'une zone plane et
**qu'**une seule bague d'étanchéité d'arbre (5, 7, 15) tourne sur l'arbre de rotor (13).

2. Entraînement compact selon au moins une des revendications précédentes,
**caractérisé en ce**
**qu'**au moins un étage de réducteur est réalisé sous la forme d'un étage de réducteur à engrenage droit.

3. Entraînement compact selon au moins une des revendications précédentes,
**caractérisé en ce**
**que** l'étage de réducteur est réalisé sous la forme d'un variateur-réducteur, en particulier d'un réducteur à courroie trapézoïdale large ou d'un entraînement à chaîne.

4. Entraînement compact selon au moins une des revendications précédentes,
**caractérisé en ce**
**que** trois bagues d'étanchéité d'arbre (5, 7, 15) tournent sur l'arbre de sortie.

5. Entraînement compact selon au moins une des revendications précédentes,
**caractérisé en ce**
**que** des dispositifs de raccordement pour des lignes de puissance sont prévus sur une partie de carter de l'entraînement compact.
